# EUROPEAN PATENT SPECIFICATION

(11) **EP 1 934 761 B1**
(45) Date of publication and mention of the grant of the patent: **18.08.2010**
(21) Application number: 06792120.5
(22) Date of filing: 18.09.2006
(51) Int. Cl.: G06F 13/28, H04L 29/06, H04L 12/56

(54) **DMA TRANSFER AND HARDWARE ACCELERATION OF PPP FRAME PROCESSING**
DMA-TRANSFER UND HARDWAREBESCHLEUNIGUNG DER PPP-FRAME-VERARBEITUNG
TRANSFERT DE DMA ET ACCELERATION MATERIELLE DU TRAITEMENT DE TRAME PPP

(30) Priority: 20.09.2005 US 230414
(43) Date of publication of application: 25.06.2008
(73) Proprietor: Telefonaktiebolaget L M Ericsson (Publ), 126 25 Stockholm (SE)
(72) Inventor: CROUGHWELL William J., Durham, NC 27707 (US); BARROW David, Durham, NC 27713 (US)
(74) Representative: Bratt, Hanna Catharina
(86) International application number: PCT/EP2006/009053
(87) International publication number: WO 2007/039081

(56) References cited:
- EP-A- 0 366 036
- US-A- 5 912 752
- US-A1- 2004 213 290
- SIMPSON W: "PPP in HDLC-like Framing" RFC 1662, July 1994 (1994-07), XP002125485

## Description

### BACKGROUND

The present invention relates generally to the field of wireless communications and in particular to hardware acceleration of PPP frame processing in conjunction with DMA transfers.

The 3rd Generation (3G) wireless communication networks provide mobile users wireless access to packet data networks, such as the Internet. Many Internet applications and services, once available only to users at fixed terminals, are now being made available via wireless communication networks to mobile users. These services include real-time streaming video and music, on-line interactive gaming, text messaging, email, web browsing, and the like. In some cases, the mobile terminal may provide Internet connectivity to another device, such as a laptop computer that otherwise lacks convenient Internet access. For example, a mobile terminal may connect to a computer via a Universal Serial Bus (USB), Bluetooth link, infrared (IR) link, or other wired or wireless connection. In this case, the attached computer is considered a peripheral device, from the point of view of the mobile terminal.

Packet-switched data are transmitted over the air interface between the wireless communication network and the mobile terminal as Internet Protocol (IP) packets. Data are transmitted between the mobile terminal and an attached peripheral device (such as a laptop computer) in a link level protocol, such as the Point to Point Protocol (PPP). PPP uses a logical framing structure similar to the High-level Data Link Control (HDLC) specification, wherein higher layer data structures (such as IP packets) are encapsulated into data link layer frames. Frames are separated by a HDLC flag, or a unique bit sequence that delimits the beginning and end of the HDLC-like frame. The receiving device inspects each octet in the frame, and detects frame boundaries by recognizing the HDLC flag.

In general, data to be encapsulated in a PPP frame (referred to herein as "original octets") may assume any value. If an octet having the value of the HDLC flag is transmitted in the frame, the receiver will recognize the bit sequence, and erroneously demark a frame boundary. Additionally, other unique bit sequences with the frame payload may be detected and cause undesired consequences. For example, some interfaces recognize particular byte values as XON and/or XOFF control signals, which may signal the end of a frame or a communication session. Modems or other devices in the communication path may recognize other bit sequences, and erroneously interpret them as control signals, triggering undesired actions. To avoid this, the frame is made "transparent" by "escaping" the octets containing potentially troublesome bit sequences.

To escape octets (also known as character escaping), a unique bit sequence (e.g., 0x7D), referred to as the escape sequence, is inserted into the frame ahead of the problematic, original octet. The value of the original octet is then modified, such as by XOR with a predetermined value (e.g., 0x20). The two octets (that is, the escape sequence and the XORed value) are then substituted in the frame for the original octet. These are referred to herein as "substitution octets." The receiver inspects each received octet, and recognizes occurrences of the escape sequence. Upon each such occurrence, it discards the escape sequence and XORs the following octet with the same predetermined value (e.g., 0x20) to recover the value of the original octet. Since the presence of the escape sequence itself, if transmitted in the frame payload, will trigger an erroneous "escape recovery" operation at the receiver, every occurrence of the escape sequence is itself escaped and modified.

The transmitter also calculates a Frame Check Sequence (FCS), a unique value that depends on the value of every original octet in the frame. The FCS is postpended to the original octets, escaped if necessary, and transmitted to the receiver just ahead of the HDLC flag. The receiver independently calculates an FCS from the received octets (following escape recovery), and compares the calculated value to that inserted into the frame by the transmitter. Any discrepancy indicates a transmission error, and the receiver may request a retransmission of the PPP frame.

PPP frame processing - including the calculation of an FCS value, the inspection of each octet, character escaping, and the insertion of HDLC flag sequences - is typically performed by software. While this is a tractable task for relatively low data rates, at high data rates, PPP frame processing may consumes a large amount of the processor's bandwidth, primarily due to the need to read and inspect each and every octet in the frame. With the advent of high data rate packet data channels in wireless communication networks (particularly on the downlink), a mobile terminal providing internet connectivity to an attached peripheral computer may have to dedicate an inordinate share of processor bandwidth to the PPP framing task.

Direct Memory Access (DMA) is a well-known technique whereby a circuit module - functionally independent from the processor - copies blocks of data from one location in memory to another, between peripherals, from memory to a peripheral, or from a peripheral to memory. Although DMA modules of varying capability and complexity are known in the art, in general, a DMA module is initialized by a processor (such as by writing registers). The processor provides the DMA module with at least a source address, a destination address, and a count (where the source and destination may each comprise a memory or a peripheral address). The DMA module then proceeds to successively read the specified quantity of data from the source address and write it to the destination address, autonomously of the processor. In performing this task, the DMA module may independently arbitrate for system resources such as bus or I/O interface access. Upon completion of the data transfer, the DMA module alerts the processor, such as by causing an interrupt. Most modern data processing systems, including many mobile terminals, include DMA modules.

Some DMA modules are capable of linked-list type transfers. The processor sets up a first DMA transfer (*e.g*., providing source and destination addresses and a count). Upon completing the first DMA transfer, the DMA module may read a "pointer" comprising, e.g., the storage location of a second source and destination address and a second count. The DMA module then commences a second DMA transfer, moving data from the second source address to the second destination. It may then read another pointer and commence a third DMA transfer, and so on, interrupting the processor only after completing a plurality of DMA transfers.

Whether operated discretely or in linked mode, a DMA module must necessarily read each and every byte or octet from a source prior to writing it to a destination.

US 2004/0213290 A1 discloses an Internet network protocol stack, along with special logic, that is embedded with a modem, thereby enabling the modem to become Internet ready. According to US 2004/0213290 A1, said modem offloads much of the network protocol processing from the main CPU and improves the overall performance of the communication system.

### SUMMARY

According to one or more embodiments of the present invention, hardware acceleration of the PPP frame processing including FCS calculation, inspection of each octet in a frame, character escaping, and HDLC flag insertion, is integrated into a DMA module. The DMA module may operate discretely (one PPP frame at a time) or may operate in a linked-list mode. In either case, PPP frame processing is performed autonomously of the processor, freeing processor bandwidth for other computational tasks.

In one embodiment, the present invention relates to a method of processing octets whiting a Direct Memory Access (DMA) transfert according to claim 1. A predetermined number of original octets are read from a first predetermined location, and each original octet is inspected. In response to its value, at least a first original octet is selectively replaced with first and second substitute octets. The original and substitute octets are written beginning at a second predetermined location. All method steps are performed autonomously of a processor.

In another embodiment, the present invention relates to a mobile terminal according to claim 7. The mobile terminal includes memory and a transceiver operative to receive data octets from a wireless communication network and store the octets in the memory. The mobile terminal also includes a Direct Memory Access (DMA) module operative to autonomously transfer a predetermined number of octets from a source address to a destination address, and a processor operative to program the DMA module with the source and destination addresses and the number of octets. The DMA module is further operative to autonomously process the octets by inspecting each octet, and responsive to the inspection, selectively replacing at least one octet with two substitute octets, prior to transferring the octets to the destination address.

### BRIEF DESCRIPTION OF DRAWINGS

Figure 1 is a functional block diagram of a mobile terminal providing Internet access to a peripheral computer via a wireless communication network.
Figure 2 is a functional block diagram of the mobile terminal of Figure 1.
Figure 3 is a block diagram of the encapsulation of an IP frame into a PPP frame, depicting conceptual intermediate steps.
Figures 4a-4b are a flow diagram depicting a method of PPP frame processing.
Figure 5a is a block diagram of one embodiment of a DMA module.
Figures 5b-5e are data movement diagrams depicting octet storage and flow through input and output buffers.

### DETAILED DESCRIPTION

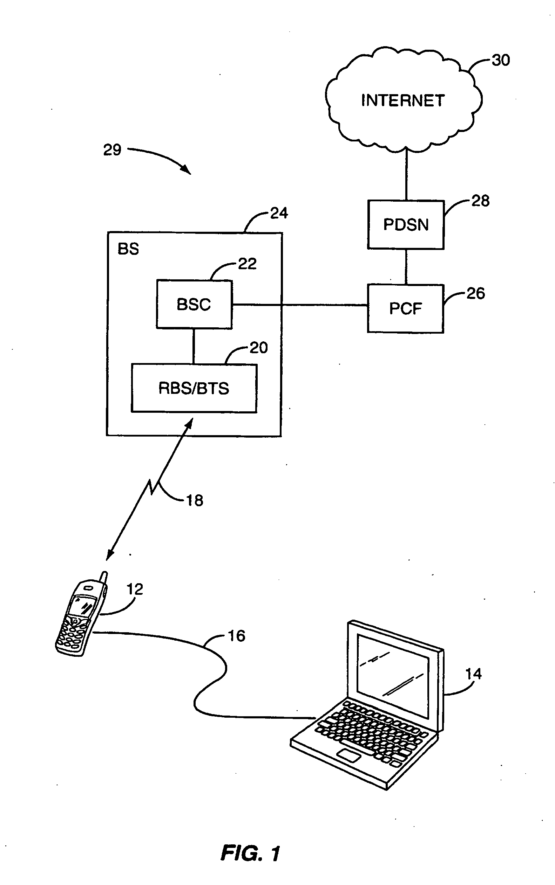

Figure 1 depicts a mobile terminal 12 providing internet connectivity for a device 14 such as a computer, via a wireless communication network 29. A mobile terminal 12 is connected to a peripheral device 14, such as laptop PC, by a data communications link 16. The link 16 may comprise Universal Serial Bus (USB), a wireless RF data communication link such as Bluetooth, a wireless optical data communication link such as IrDA, or any other suitable data link.

The mobile terminal 12 communicates via one or more wireless channels 18 with a Radio Base Station (RBS) 20, also known in the art as a Base Transceiver Station (BTS). The RBS/BTS 20 operates under the control of a Base Station Controller (BSC) 22. The BSC 22 and RBS/BTS 20 together make up a Base Station (BS) 24. The BS 24 transfers packet data via a Packet Control Facility (PCF) 26 with a Packet Data Serving Node (PDSN) 28. The PDSN 28 exchanges packet data with one or more packet-switched networks, such as the internet 30. Modem versions of wireless communications networks, such as for example cdma2000 1xEV-DO and 1xEV-DV, WCDMA, or EGPRS, provide for high-bandwidth packet data communications on dedicated packet data channels. Data is broadcast on the packet data channels in Internet Protocol (IP) packets.

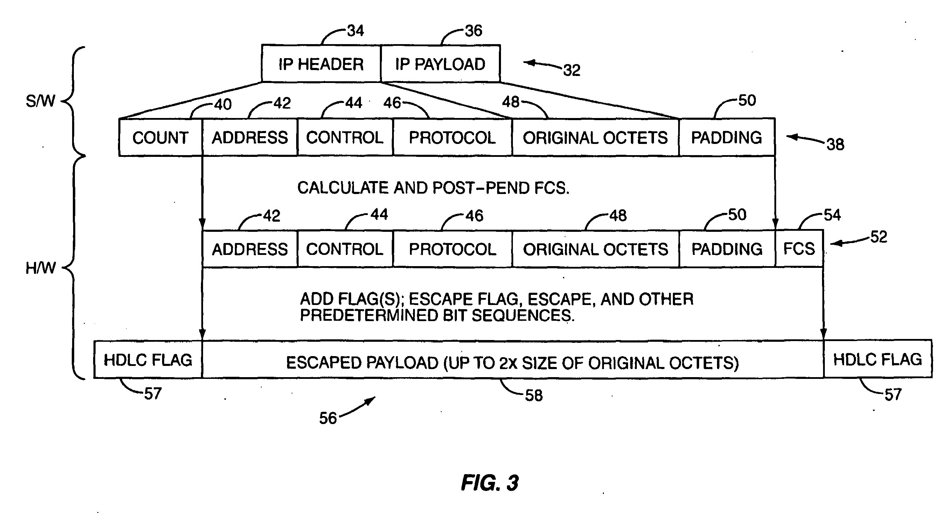

Figure 3 depicts a functional block diagram of the mobile terminal 12 that is operative to provide internet access to an attached peripheral device 14. The mobile terminal 12 receives IP packets over the air interface from the wireless communication network 29 (on the downlink), and encapsulates the data in the IP packets into PPP frames, sending the PPP frames to the peripheral device 14. The mobile terminal 12 also receives PPP frames from the peripheral device 14, decapsulates them and processes the data into IP packets, and sends the IP packets to the wireless communication network 29 on an uplink channel. The mobile terminal 12 includes a processor 102, memory 104, a transceiver 106, user interface 108, a DMA module 110 that includes PPP frame processing hardware acceleration, and a peripheral device communication interface 112.

The processor 102 is a stored program microprocessor, microcontroller, digital signal processor, or the like, as well known in the art. The processor 102 controls the overall operation of the mobile terminal 100, executing programs from memory 104, which may comprise RAM (SRAM, DRAM, SDRAM, FLASH, etc.), ROM (PROM, EPROM, EEPROM, etc.), and magnetic or optical media. In particular, in one embodiment, the processor 102 preprocesses received IP packets into pre-PPP PDUs, as discussed further herein, and may translate PPP frames into IP packets. In some embodiments, the processor 102 processes hardware-accelerated octets into IP packets for transmission to the wireless communication network 29. In addition, the processor 102 controls the operation of the DMA module 110.

The transceiver 106 includes transmit and receive circuits necessary to effect two-way voice and data communication across a wireless communication link 18. The transmitter chain includes an Analog to Digital Converter (ADC) 113 to convert voice signals (e.g., from the microphone 138 in the user interface 108) to digital format; a Digital Signal Processor (DSP) 114 to encode the digital voice and/or data; a Digital to Analog Converter (DAC) 116 to convert the encoded data to analog format, a modulator 118, receiving a Radio Frequency (RF) signal from an oscillator 120, for modulating the encoded signal onto an RF carrier; and a power,amplifier 122. The encoded, modulated, amplified signal is routed by a duplexer 124 to an antenna 126 for transmission to a RBS/BTS 20.

In the receiver chain, signals received by the antenna 126 from a RBS/BTS 20 are routed by the duplexer 124 to a Low Noise Amplifier (LNA) 127; a demodulator 128 for recovering a baseband signal from the carrier signal; an ADC 130 to convert the baseband signal to digital format; a DSP 132 for decoding and baseband processing; and a DAC 133 for converting digitally encoded speech signals into audible signals, which may be routed to a speaker 146 in the user interface 108.

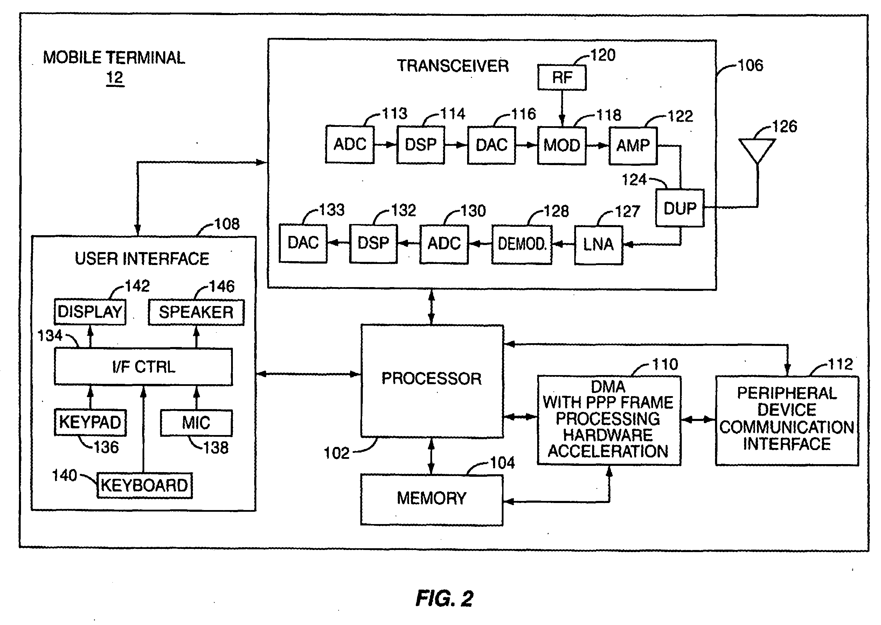

Those of skill in the art will recognize that the transceiver 106 as depicted in Fig. 2 is a functional representation only; in any given implementation, circuits such as the DSP 116, 130; the ADC 113, 130; and/or the DAC 116, 133 may be shared between the transmit and receive chains. In general, the transceiver 106 includes all circuits and functionality necessary to comprise a fully functional duplex wireless transceiver in accordance with the protocol of the wireless communication system 10.

The user interface 108 accepts input from, and provides output to, the user of the mobile terminal 12. An interface controller 134 accepts input from at least a keypad 136 and a microphone 138. The mobile terminal 12 may additionally include a full or partial alphanumeric keyboard 140, which also provides input to the interface controller 134. The interface controller 134 directs visual output to a display 142 and audio output, if present, to one or more speakers 146. The user may access the user interface 108 to control the operation of the mobile terminal 12, enter telephone numbers, navigate menus, and the like.

In some cases, as depicted in Fig. 1, the mobile terminal 12 connects to a peripheral device 14, such as a computer, providing the computer with access to the internet 30. This communication is via a peripheral device communication interface 112, which may comprise for example a USB, Bluetooth, IrDA, or other interface, as necessary or desired.

According to one or more embodiments, a DMA module 110 having PPP frame processing hardware acceleration features connects to both the memory 104 and the peripheral device I/F 112. The DMA module 110 receives commands from the processor 102, and may report status and errors to the processor 102, such as by raising interrupts. DMA functionality is well known in the art; the PPP frame processing hardware acceleration integrated with the DMA module 110 is explained in detail below.

As discussed above, the mobile terminal 12 receives data from the wireless network 29 in IP packets, across a packet data channel. The translation of IP packets to PPP frames is described with reference to Figure 3. According to one or more embodiments of the present invention, at least some aspects of the translation of IP packets into PPP frames is assisted by hardware acceleration in the DMA module 110. In one embodiment, software executing on the processor 102 initially formats each IP packet into a preliminary frame structure, referred to herein as a pre-PPP Packet Data Unit (PDU) 38. A hardware accelerator within the DMA module 110 then processes this pre-PPP PDU 38, performing FCS calculation, octet inspection, character escaping, and HDLC flag insertion.

A representative received IP packet 32 comprises an IP header 34 and IP payload 36. As well known in the art, the IP header 34 includes source and destination IP addresses, the size of the IP payload, and various other information. At least the size of the IP payload 36 (i.e., an octet count) is extracted from the IP header 34 and used to calculate the count field 32, and to determine whether and how much padding 42 may be required to ensure that the PPP frame comprises an integer number x 32 bits (or other bit width, depending on the characteristics of the mobile terminal such as bus width, the logical organization of memory into blocks, and the like).

The pre-PPP PDU 38 comprises an octet count field 40, an address field 42, a control field 44, a protocol field 46, the data referred to herein as original octets 48, and padding 50 as required.

The address field 42 comprises a single octet, which may contain a station address, as defined between the mobile terminal 12 and the peripheral device 14. In one embodiment, the address field contains the bit sequence 0xFF, which is the All-Stations address. The All-Stations address must be recognized by all receivers, and may be used when individual station addresses are not defined.

The control field 44 comprises a single octet. Control field 36 values may be defined between the mobile terminal 12 and the peripheral device 14. In the absence of another definition, the control field 44 may contain the bit sequence 0x03, which is the Un-numbered Information (UI) command with the Poll/Final (P/F) bit set to zero.

The protocol field 46 comprises one or two octets, the value of which identifies the datagram encapsulated in the information field 48.

The data to be transmitted comprises the original octets 48, *i.e*., the IP payload 36. Padding 50 may be added as necessary to match the PPP frame size to an appropriate bus width.

Hardware acceleration of further PPP frame processing is invoked by setting up a DMA transfer from the starting address of the pre-PPP PDU 38, with a count derived from the count field 40. The DMA module 110 begins the data transfer, performing PPP framing operations on each octet as it is read from memory as part of the DMA transfer. The PPP framing operations depicted in Fig. 3 are broken into separate sequences for purpose of explication only; in practice, all PPP frame processing is performed in a single "pass" through the pre-PPP PDU 38. Accordingly, the intermediate PDU 52 is conceptual only, presented in Fig. 3 only for clarity of explanation.

As the hardware accelerator in the DMA module 100 processes octets of the pre-PPP PDU 38, it generates a Frame Check Sequence (FCS). The FCS is calculated on the control fields (i.e., address 42, control 44, and protocol 46) as well as the original octets 48 and any padding 50. Note that the FCS is calculated prior to any character escaping, and does not include the HDLC flag(s). The FCS may comprise a hash function, or other logical and/or arithmetic operation(s) as known in the art, to obtain a value uniquely derived from the octets in the pre-PPP PDU 38. In one embodiment, the FCS comprises Ones Complement - 16 bit (OC16) value. The FCS provides an error checking mechanism, whereby the receiver may detect transmission errors if an independently calculated FCS does not match the FCS field 54 that is transmitted as part of the PPP frame 56. In one embodiment, the FCS field 54 is two octets; although in other embodiments it may comprise four octets, or any other number agreed to by the mobile terminal 12 and the peripheral device 14.

Character escaping is performed on all octets in the (conceptual) intermediate PDU 52 to obtain an escaped, or transparent, payload 58 of the final PPP frame 56. At least one HDLC flag 59 is added to delimit the PPP frame 56 (if the PPP frame 56 immediately follows a prior PPP frame 56, the prepended HDLC flag 59 may be omitted; only one HDLC flag 59 need be inserted between PPP frames 56). Since any - and hence up to all - of the possible values for the original octets may be defined as requiring character escaping, the escaped payload 58 may be up to slightly more than twice the size of the original octets (the FCS, and possible escaping for it, is added). This may also occur if only a few octet values are flagged for character escaping, but most or all of the octets in an IP frame 32 have that value. One example of this situation is downloading a file comprising the pixel values of an image, where the color value for all background pixels corresponds to an octet value that must be character escaped.

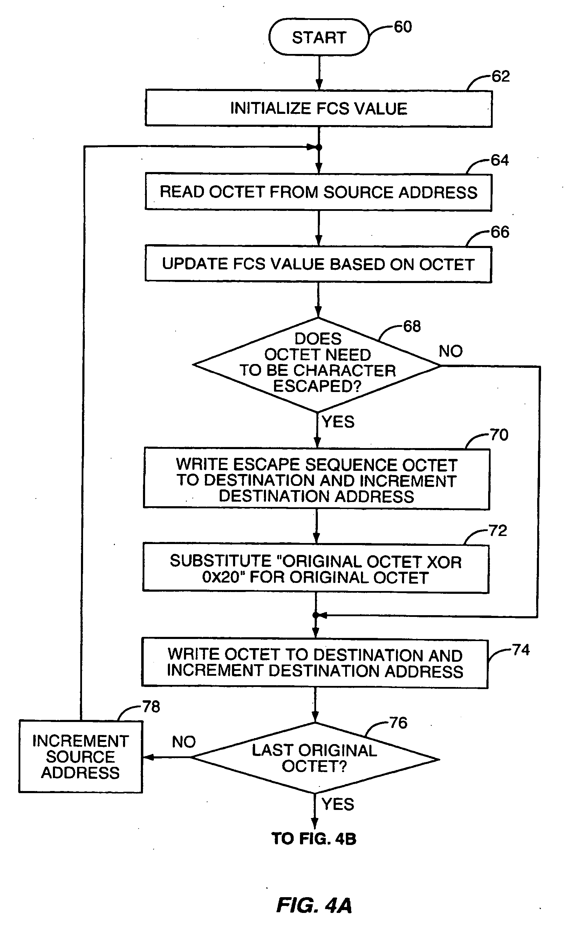

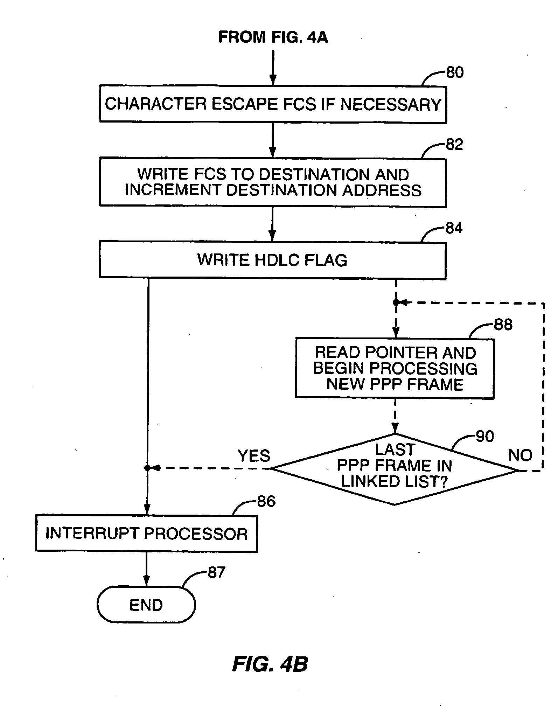

A representative, actual method of PPP frame processing by a hardware accelerator in the DMA module 110 (as opposed to the conceptual view of Fig. 3) is depicted in Figure 4. The process starts (block 60) when the processor 102 "sets up" the DMA module 110, such as by writing source and destination addresses, a count, and other control information, as necessary or desired, to DMA module 110 control registers. The DMA module 110 initializes the FCS value (block 62), *e.g*., to zero, and reads an original octet from the source address (block 64). In general, the source address may resolve to a memory 104 address or an address mapped to the peripheral device communication interface 112. While Fig. 4 and this discussion refer to reading each octet independently, those of skill in the art will readily recognize that the DMA module 110 may read and write data in, *e.g*., 32- or 64-bit "words," or bursts thereof, and process the octets independently. The DMA module 110 updates the FCS value based on the value of the original octet read (block 66).

The DMA module 110 then inspects the original octet to determine whether character escaping is necessary (block 68). If the value of the original octet matches the escape sequence, HDLC flag sequence, or any other predefined bit sequence, an escape sequence (*e.g*., 0x7E) is inserted into the PPP frame 56 by writing it to the destination address and incrementing the destination address (block 70). The original octet is then XORed with a predetermined value (*e.g*., 0x20), and the result substituted for the original octet (block 72). The DMA module 110 then writes the octet (whether original or escape-modified) to the destination address and increments the destination address (block 74). This process continues through all the control fields 42, 44, 46, the original octets 48, and any padding 50. If octets remain to be processed (block 76), the DMA module 110 increments the source address (block 78), and reads the next octet (block 64).

When all of the octets in the pre-PPP PDU 38 have been processed (block 76), the FCS value is inspected and character escaped if necessary (block 80). Although not detailed in Fig. 4, this comprises writing the escape sequence and substituting an FCS octet with its value XORed with, *e.g*., 0x20, as described with reference to blocks 70 and 72. The DMA module 110 then writes the (possibly character escaped) FCS octets to the destination address and increments the destination address (block 82). The DMA module next writes the HDLC flag 57 (block 84) to delimit the end of the PPP frame 56, and signals the processor 102 that the DMA transfer and PPP frame processing task is complete, such as by causing an interrupt (block 86), ending the process (block 87).

In one embodiment, the DMA module 110 supports "linked-list" operation, wherein multiple DMA transfers may be chained together. In this embodiment, the DMA module 110 additionally supports the linked-list hardware-accelerated processing of two or more PPP frames 56. Upon completing the first PPP frame 56 by writing an HDLC flag 57 (block 84), the DMA module 110 may read a "pointer," such as from the source address immediately following the end of the pre-PPP PDU 38. This pointer comprises at least a source address and a count for a new pre-PPP PDU 38, which the DMA module 110 may load into its control registers in lieu of the processor 102 explicitly writing these registers. The pointer may include a destination address; alternatively, the DMA module 110 may append the new PPP frame 56 to the previous PPP frame 56, by writing the new escaped payload 58 immediately after the HDLC flag 57 written during processing the previous PPP frame 56. In either case, upon reading the pointer, the DMA module 110 begins reading octets from a new pre-PPP PDU 38, and processing a new PPP frame 56 (block 88).

This process may continue for as long a chain of pre-PPP PDUs 38 as the processor 102 has set up in a linked-list format. Upon processing the last PPP frame 56 in the list (block 90), as indicated, for example, by reading a predetermined "terminal" value as a pointer, the DMA module 110 will interrupt the processor 102 (block 86), and end the process (block 87). Note that up to this point, all of the pre-PPP PDUs 38 in the linked list structure were processed into PPP frames 56 autonomously of the processor 102, relieving the processor 102 of a significant computational load, and possibly processing the PPP frames 56 faster than the processor 102 could have done. Those of skill in the art will recognize alternative implementations for a linked-list operation. For example, the processor 102 may write a series of source addresses and counts to control registers in the DMA module 110 prior to initiating the first DMA transfer and PPP frame processing operation. All such implementation details fall within the scope of the present invention.

Users' internet interactions tend to be highly asynchronous, with far greater data transfer in the downlink direction than in the uplink direction. For this reason, wireless communication networks 29 dedicate higher bandwidth packet data channels to the downlink than to the uplink. The primary need for hardware acceleration of PPP framing operations, then, is anticipated to be in the downlink direction - that is, the translation in the mobile terminal 12 of IP packets 32 received from the wireless communication network 29 into PPP frames 56 to transmit to the peripheral device 14. Uplink direction translations - PPP frames 56 to IP packets 32 - may be handled in software without imposing an inordinate burden on the processor 102. Hence, the present invention is explained herein primarily in the context of IP packet 32 to PPP frame 56 translation.

However, in one embodiment, PPP framing hardware acceleration in the DMA module 100 additionally assists in the translation of PPP frames 56 into IP packets 32. In this embodiment, a source address may direct the DMA controller 110 to read a PPP frame 56 from the peripheral device 14, or from the peripheral device interface circuit 112 (e.g., a USB frame), or from a receive buffer in memory 104 containing data transferred from the peripheral device 14. While transferring the PPP frame 56, octet by octet, to a destination address (such as an air interface 18 transmit buffer in memory 104), hardware acceleration circuits within the DMA module 110 inspect each octet for an escape sequence. Any detected escape sequence octet is discarded, and the following octet XORed with, e.g., 0x20, to restore the original octet.

The DMA module 110 calculates an FCS on the recovered octets. In one embodiment the DMA module 110 compares the calculated FCS to the FCS field 54 in the PPP frame 56 for error detection. In another embodiment, it provides the calculated FCS to the processor 102 to perform the comparison. The DMA module 110 detects the HDLC flags 57 to demark the PPP frame 56 boundaries, and discards the HDLC flags 57. In one or more embodiments, specific octet values or sequences may be detected and acted upon. For example, the DMA module 110 may support modem TIES detection, wherein receipt of the character sequence "+++" transitions the modem from data mode to command mode, terminating the current data transmission. Other octet value or sequence detection and corresponding action may be included as necessary or desired, to support specific peripheral devices 14.

In various embodiments, the control fields 42, 44, 46 and padding 50 may be extracted and discarded, or may be retained for processing by software. Software executing on the processor 102 may then read the data structure written by the DMA module 110 at the destination address, generate an IP header 34 by supplying source and destination IP addresses and payload size information, pack the decapsulated octets 48 into the IP payload 36, and thus generate an IP packet 32 for transmission to the wireless communication system 29 on an uplink air channel 18.

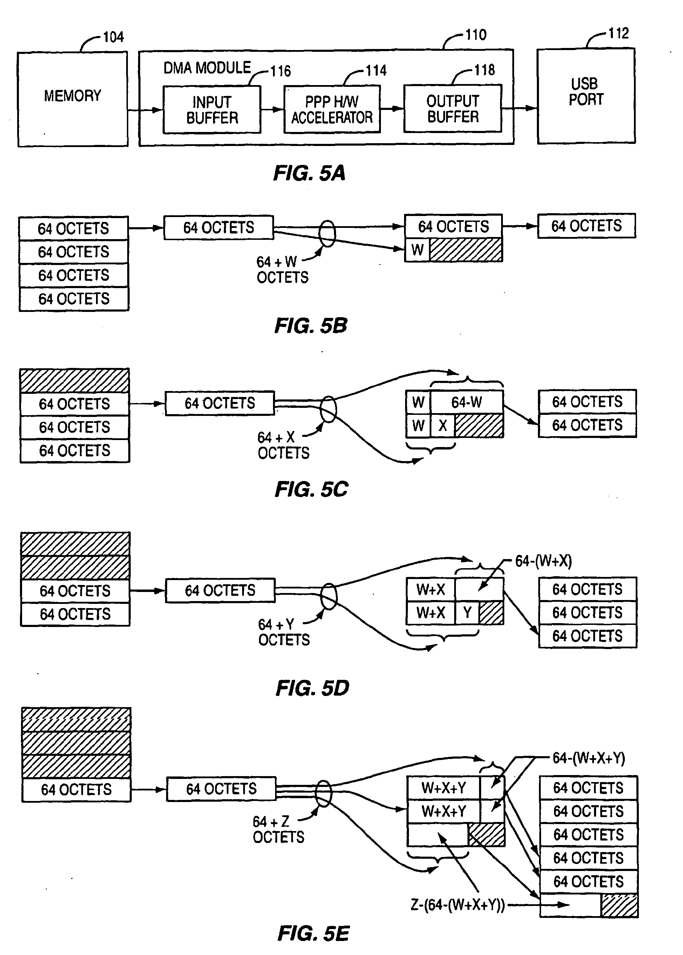

Figure 5a depicts a functional block diagram of one embodiment of the DMA module 110 with hardware-accelerated PPP frame processing, and depicts the operation of data buffers for a representative example. Fig. 5a corresponds to an embodiment wherein the mobile terminal 12 connects to a peripheral device 14 via a USB port 112. The DMA module 110 is depicted, showing an internal PPP hardware accelerator block 114. In the embodiment depicted in Fig. 5a, an input buffer 116, which may for example be structured as a FIFO, buffers octets from the pre-PPP PDU 38 read from memory 104. The input buffer 116 may conveniently be selected to match the block size of memory 104, such as for example 64 octets. Due to the USB specification, the USB port 112 must know the number of bytes to be transferred prior to beginning a data transfer to the peripheral device 14. This requires an output buffer 118 within the DMA module 110, to buffer a known number of octets prior to the DMA module 110 writing the octets to the destination address of the USB port 112. The required size of the output buffer 118, relative to the input buffer 116, is explored below.

In Figures 5b-5e, a 256-octet pre-PPP PDU 38, buffered in memory 104 in four 64-octet blocks, is processed by the PPP hardware accelerator block 114 from a 64-octet input buffer 116. The PPP frame 56 is accumulated in the output buffer 118, and written to the USP port 112 whenever a full 64 octets are available.

Figure 5b depicts the processing of the initial 64 octets. The DMA module 110 reads 64 octets from memory 104 to the input buffer 116. The PPP hardware accelerator block 114 processes the octets, writing 64 + W octets to the output buffer 118. Note that W denotes only a number, or count, of octets; it does not identify a particular sequence of octets. The W more octets in the output than the input reflect at least the addition of a leading HDLC flag 57 any character escaping, substituting two octets for each original, escaped octet. When the first 64 octets accumulate in the output buffer 118, the DMA module 110 writes them to the USB port 112, leaving W octets in the output buffer 118.

Figure 5c depicts the processing of the next set of 64 octets. The PPP hardware accelerator block 114 writes 64 + X octets to the output buffer 118, stored as indicated, with 64 - W octets in the first block, and W + X octets in the second block, where (64 - W) + (W + X) = 64 + X. As soon as 64 - W of these are written, filling the first block, the DMA module 110 writes out W + (64 - W) = 64 octets to the USB port 112. When the PPP hardware accelerator block 114 completes processing the 64 octets from the input buffer 116, W + X octets remain in the output buffer 118.

Figure 5d depicts the processing of the next set of 64 octets. The PPP hardware accelerator block 114 writes 64 + Y octets to the output buffer 118, stored as indicated, with 64 - (W + X) octets in the first block, and W + X + Y octets in the second block, where (64 - (W + X)) + (W + X +Y) = 64 + Y. As soon as 64 - (W + X) of these octets are written, filling the first block, the DMA module 110 writes out W + X + (64 - (W + X)) = 64 octets to the USB port 112. When the PPP hardware accelerator block 114 completes processing the 64 octets from the input buffer 116, W + X + Y octets remain in the output buffer 118.

Figure 5e depicts the processing of the final set of 64 octets. The PPP hardware accelerator block 114 writes 64 + Z octets to the output buffer 118, where Z includes possible escaped octets, the FCS field 54 (with possible character escaping), and the HDLC flag 57. The 64 + Z octets are stored as indicated, with 64 - (W + X + Y) octets in the first block; W + X + Y + (64 - (W + X + Y)) = 64 octets in the second block, and Z - (64 - (W + X + Y)) octets in the third block. Here, (64 - (W + X + Y)) + (W + X +Y) + (64 - (W + X + Y)) + (Z - (64 + (W + X + Y))) = 64 + Z. In this example, W + X + Y + Z is greater than 64 octets but less than 128, resulting in a fragment less than 64 octets following two 64 octet blocks. This is a representative scenario; it is neither the minimum nor the worst case.

As soon as the first 64 - (W + X + Y) of the octets are written, filling the first block, the DMA module 110 writes out W + X + Y + (64 - (W + X + Y)) = 64 octets to the USB port 112. When the next W + X + Y + (64 - (W + X + Y)) = 64 octets are written, the DMA module 110 writes them out to the USB port 112 as well. Finally, Z - (64 + (W + X + Y)) octets remain to be written to the USB port 112. The PPP hardware accelerator block 114 may signal the DMA controller 10 upon writing the final HDLC flag 57, indicating to the DMA controller 110 to write the last partial block of octets to the USB port 112. The DMA controller 110 then interrupts the processor 102, or alternatively, in linked-list mode, may read a pointer from memory 104 or otherwise identify another pre-PPP PDU 38 to be PPP frame processed and DMA transferred to the USB port 112.

In the worst case, each processed PPP frame 56 may result in double the number of original octets in the escaped payload 58, plus an additional minimum of three octets (two in the FCS field 54 and one HDLC flag 57). In the worst case, both FCS field 54 octets must be character escaped, and HDLC flags 57 both prepended and postpended to the escaped payload 58, for a total of 2X original octets + 6.

To determine the minimum size of the output buffer 118, relative to the input buffer 116, note first that the output buffer 118 must be 2X the input buffer 116, since every original octet may require character escaping. In addition, unless immediately following a preceding PPP frame 56, a HLDC flag 57 must first be written, making the size of the output buffer 118 one octet more than 2X the input buffer 116. However, the DMA module 110 may write a block of data from the output buffer 118 as soon as the block fills, leaving a residue of octets that may, in general, be up to one less than output transfer block size. To process the next block requires 2X the input buffer 116 block size plus the residue. If the input buffer 116 and output buffer 118 blocks sizes are the same, the minimum worst case size of the output buffer 118 is 3X the size of the input buffer 116 minus one. In addition to this, for the final block processed, at least two and possibly four octets comprise the FCS field 54, which may be character escaped to up to eight octets. Finally, the PPP hardware accelerator block 114 must write a HDLC flag 57. Thus, the worst case minimum size of the output buffer 118 is 3X the size of the input buffer - 1 + 8 + 1. For a 64 octet block size as depicted in Figs. 5b-5e, the output buffer 118 must be 3 x 64 - 1 + 8 + 1 = 200 octets.

The present invention relieves significant computational load from a processor 102 when a large number of and/or high data rate of IP packets 32 must be translated to PPP frames 56, such as when the mobile terminal 12 provides internet connectivity to a peripheral device 14 such as a computer. In the DMA transfer process reading data from a source address and writing it to a destination address, the PPP framing hardware-accelerated DMA module 110 may perform FCS calculation, character escaping, and HDLC flag insertion autonomously of the processor 102. In one embodiment, hardware acceleration may also be utilized in the uplink direction, translating PPP frames 56 into IP packets 32 by performing FCS calculation and comparison for error detection, escaped character recovery, and frame boundary detection autonomously of the processor 102.

## Claims

1. A method of processing octets within a Direct Memory Access, DMA, transfer, comprising:
reading an original octet from a first predetermined location as part of the DMA transfer;
inspecting the original octet as part of the DMA transfer;
in response to its value, selectively replacing the original octet with first and second substitute octets as part of the DMA transfer; and
writing the original or substitute octets to a second predetermined location as part of the DMA transfer; and
repeating the above steps a predetermined number of times;
wherein all method steps are performed autonomously of a processor.

2. The method of claim 1 further comprising calculating a Frame Check Sequence (54) based on the values of the octets.

3. The method of claim 2 further comprising appending the Frame Check Sequence (54) to the octets prior to writing the octets beginning at the second predetermined location.

4. The method of claim 1 further comprising appending a frame flag (57) to the octets prior to writing the octets beginning at the second predetermined location.

5. The method of claim 1 wherein the first substitute octet is an escape sequence.

6. The method of claim 1 further comprising, after reading all the original octets (48), reading a source and destination location and count to process another group of octets.

7. A mobile terminal (12), comprising:
memory (104);
a transceiver (106) operative to receive data octets from a wireless communication network and store the octets in the memory (104);
a Direct Memory Access, DMA, module (110) operative to autonomously transfer a predetermined number of octets from a source memory address to a destination memory address; and
a processor (102) operative to program the DMA module (110) with the source and destination addresses and the number of octets; wherein
the DMA module (110) is further operative to autonomously process the octets by inspecting each octet, and responsive to the inspection, selectively replacing at least one octet with two substitute octets, prior to transferring the octets to the destination address.

8. The mobile terminal of claim 7, wherein the DMA module is further operative to calculate a Frame Check Sequence, FCS, (54) in response to the octets, and to transfer the FCS (54) to the destination address following the octets.

9. The mobile terminal (12) of claim 7 wherein the DMA module (110) is further operative to append a frame flag (57) to the octets prior to transferring the octets to the destination address.

10. The mobile terminal (12) of claim 7, further comprising a data interface (112) operative to transfer data between the mobile terminal (12) and a peripheral device (14).

11. The mobile terminal (12) of claim 10 wherein one of the source and destination addresses is a memory address and other of the source and destination addresses is a peripheral address.

12. The mobile terminal (12) of claim 7 wherein the source address is a memory address, and wherein the processor (102) formats the octets in memory before the DMA module (110) reads the octets.

13. The mobile terminal (12) of claim 12 wherein the processor (102) prepends one or more of Address, Control, and Protocol fields (42, 44, 46) to the octets.

14. The mobile terminal (12) of claim 12 wherein the processor (102) postpends a second source and destination address and a second octet count, and wherein the DMA module (110) autonomously processes and transfers octets from the second source address to the second destination address.

15. The mobile terminal (1:2) of claim 7 where in the DMA module (110) further includes a PPP hardware acceleration block (114) operative to autonomously process the octets by inspecting each octet, and responsive to the inspection, selectively replacing at least one octet with two substitute octets.

16. The mobile Terminal (12) of claim 15 wherein the DMA module (110) further comprises an input buffer (116) from which the PPP hardware acceleration block (114) reads octets and an output buffer (118) to which the PPP hardware acceleration block (114) writes processed octets.

17. The mobile terminal (12) of claim 16 wherein the size of the output buffer (118) exceeds three times the size of the input buffer (118).

18. The mobile terminal (12) of claim 7 further comprising a peripheral device communication interface (112), and wherein one of the source and destination addresses resolve to the peripheral device communication interface (112).

19. The mobile terminal (12) of claim 7 wherein the DMA module (110) is further operative to autonomously process the octets by inspecting each octet, and responsive to the inspection, selectively discarding the octet and replacing the next read octet with a value derived from a logical operation on the octet, prior to transferring the octets to the destination address.

20. The mobile (12) terminal of claim 19, wherein the DMA module (110) is further operative to calculate a Frame Check Sequence, FCS, in response to the octets, and to compare the FCS to an FCS value in one or more of the octets read.

21. The mobile terminal (12) of claim 19 wherein the DMA module (110) is further operative to detect one or more frame flags in the octets, and to discard the frame-flag octets from the octets transferred to the destination address.

## Patentansprüche

1. Verfahren zur Verarbeitung von Oktetten innerhalb eines Speicherdirektzugriffs- bzw. DMA-Transfers, umfassend:
Auslesen eines Originaloktetts aus einer ersten vorbestimmten Speicherstelle als Teil des DMA-Transfers;
Prüfen des Originaloktetts als Teil des DMA-Transfers;
selektives Ersetzen als Reaktion auf seinen Wert des Originaloktetts durch erste und zweite Ersatzoktetts als Teil des DMA-Transfers; und
Schreiben der Original- oder Ersatzoktette in eine zweite vorbestimmte Speicherstelle als Teil des DMA-Transfers; und
Wiederholen der vorstehenden Schritte eine vorbestimmte Anzahl von Malen;
wobei alle Verfahrenschritte unabhängig von einem Prozessor ausgeführt werden.

2. Verfahren nach Anspruch 1, ferner umfassend ein Berechnen einer Frame-Prüffolge (54) auf der Basis der Werte der Oktette.

3. Verfahren nach Anspruch 2, ferner umfassend ein Anhängen der Frame-Prüffolge (54) an die Oktette vor dem Schreiben der Oktette beginnend an der zweiten vorbestimmten Speicherstelle.

4. Verfahren nach Anspruch 1, ferner umfassend ein Anhängen eines Frame-Flags (57) an die Oktette vor dem Schreiben der Oktette beginnend an der zweiten vorbestimmten Speicherstelle.

5. Verfahren nach Anspruch 1, wobei das erste Ersatzoktett eine Escape-Folge ist.

6. Verfahren nach Anspruch 1, ferner umfassend nach dem Auslesen aller Originaloktette (48) ein Auslesen einer Ursprungs- und Zielspeicherstelle und Zählung, um eine andere Gruppe von Oktetten zu verarbeiten.

7. Mobiles Endgerät (12), umfassend:
einen Speicher (104);
einen Sendeempfänger (106), der so funktioniert, dass er Datenoktette von einem drahtlosen Kommunikationsnetz empfängt und die Oktette im Speicher (104) speichert;
ein Speicherdirektzugriffs- bzw. DMA-Modul (110), das so funktioniert, dass es eine vorbestimmte Anzahl von Oktetten von einer Ursprungsspeicheradresse unabhängig an eine Zielspeicheradresse überträgt; und
einen Prozessor (102), der so funktioniert, dass er das DMA-Modul (110) mit den Ursprungs- und Zieladressen und der Anzahl von Oktetten programmiert; wobei
das DMA-Modul (110) ferner so funktioniert, dass es die Oktette durch Prüfen jedes Oktetts und selektives Ersetzen wenigstens eines Oktetts durch zwei Ersatzoktette als Reaktion auf die Prüfung vor dem Übertragen der Oktette an die Zieladresse unabhängig verarbeitet.

8. Mobiles Endgerät nach Anspruch 7, wobei das DMA-Modul ferner so funktioniert, dass es eine Frame-Prüffolge FCS (54) als Reaktion auf die Oktette berechnet und die FCS (54) den Oktetten folgend an die Zieladresse überträgt.

9. Mobiles Endgerät (12) nach Anspruch 7, wobei das DMA-Modul (110) ferner so funktioniert, dass es vor dem Übertragen der Oktette an die Zieladresse ein Frame-Flag (57) an die Oktette anhängt.

10. Mobiles Endgerät (12) nach Anspruch 7, ferner umfassend eine Datenschnittstelle (112), die so funktioniert, dass sie Daten zwischen dem mobilen Endgerät (12) und einem Peripheriegerät (14) überträgt.

11. Mobiles Endgerät (12) nach Anspruch 10, wobei eine der Ursprungs- und Zieladressen eine Speicheradresse ist und die andere der Ursprungs- und Zieladressen eine periphere Adresse ist.

12. Mobiles Endgerät (12) nach Anspruch 7, wobei die Ursprungsadresse eine Speicheradresse ist, und wobei der Prozessor (102) die Oktette im Speicher formatiert, bevor das DMA-Modul (110) die Oktette ausliest.

13. Mobiles Endgerät (12) nach Anspruch 12, wobei der Prozessor (102) eines oder mehrere von Adress-, Steuer- und Protokollfeldern (42, 44, 46) den Oktetten voranstellt.

14. Mobiles Endgerät (12) nach Anspruch 12, wobei der Prozessor (102) eine zweite Ursprungs- und Zieladresse und eine zweite Oktettzählung voranstellt, und wobei das DMA-Modul (110) Oktette von der zweiten Ursprungsadresse unabhängig verarbeitet und an die zweite Zieladresse überträgt.

15. Mobiles Endgerät (12) nach Anspruch 7, wobei das DMA-Modul (110) ferner einen PPP-Hardwarebeschleunigungsblock (114) umfasst, der so funktioniert, dass er die Oktette durch Prüfen jedes Oktetts und selektives Ersetzen wenigstens eines Oktetts durch zwei Ersatzoktette unabhängig verarbeitet.

16. Mobiles Endgerät (12) nach Anspruch 15, wobei das DMA-Modul (110) ferner einen Eingangspuffer (116), aus welchem der PPP-Hardwarebeschleunigungsblock (114) Oktette ausliest, und einen Ausgangspuffer (118) umfasst, in welchen der PPP-Hardwarebeschleunigungsblock (114) verarbeitete Oktette schreibt.

17. Mobiles Endgerät (12) nach Anspruch 16, wobei die Größe des Ausgangspuffers (118) dreimal größer als die Größe des Eingangspuffers (118) ist.

18. Mobiles Endgerät (12) nach Anspruch 7, ferner umfassend eine Peripheriegeräte-Kommunikationsschnittstelle (112), und wobei eine der Ursprungs- und Zieladressen in die Peripheriegeräte-Kommunikationsschnittstelle (112) auflöst.

19. Mobiles Endgerät (12) nach Anspruch 7, wobei das DMA-Modul (110) ferner so funktioniert, dass es die Oktette durch Prüfen jedes Oktetts und selektives Verwerfen des Oktetts und Ersetzen des nächsten ausgelesenen Oktetts durch einen von einer logischen Operation am Oktett abgeleiteten Wert als Reaktion auf die Prüfung vor dem Übertragen der Oktette an die Zieladresse unabhängig verarbeitet.

20. Mobiles Endgerät (12) nach Anspruch 19, wobei das DMA-Modul (110) ferner so funktioniert, dass es eine Frame-Prüffolge FCS als Reaktion auf die Oktette berechnet und die FCS mit einem FCS-Wert in einem oder mehreren der ausgelesenen Oktette vergleicht.

21. Mobiles Endgerät (12) nach Anspruch 19, wobei das DMA-Modul (110) ferner so funktioniert, dass es ein oder mehrere Frame-Flags in den Oktetten erkennt und die Frame-Flag-Oktette aus den an die Zieladresse übertragenen Oktetten verwirft.

## Revendications

1. Procédé de traitement d'octets à l'intérieur d'un transfert de DMA, accès direct à la mémoire, comprenant les étapes consistant à :
lire un octet d'origine depuis un premier emplacement prédéterminé en tant que partie du transfert de DMA ;
inspecter l'octet d'origine en tant que partie du transfert de DMA ;
en réponse à sa valeur, remplacer sélectivement l'octet d'origine par un premier et un second octet de substitution en tant que partie du transfert de DMA ; et
écrire les octets d'origine ou de substitution à un second emplacement prédéterminé en tant que partie du transfert de DMA ; et
répéter les étapes ci-dessus un nombre de fois prédéterminé ;
dans lequel toutes les étapes de procédé sont exécutées de manière autonome par un processeur.

2. Procédé selon la revendication 1, comprenant en outre de calculer une séquence de vérification de trame (54) sur la base des valeurs des octets.

3. Procédé selon la revendication 2, comprenant en outre d'ajouter la séquence dé vérification de trame (54) aux octets avant d'écrire les octets commençant au second emplacement prédéterminé.

4. Procédé selon la revendication 1, comprenant en outre d'ajouter un fanion de trame (57) aux octets avant d'écrire les octets commençant au second emplacement prédéterminé.

5. Procédé selon la revendication 1, dans lequel le premier octet de substitution est une séquence d'échappement.

6. Procédé selon la revendication 1, comprenant en outre, après la lecture de tous les octets d'origine (48), de lire un emplacement et un compte de source et de destination afin de traiter un autre groupe d'octets.

7. Terminal mobile (12), comprenant :
une mémoire (104) ;
un émetteur/récepteur (106) opérationnel afin de recevoir des octets de données provenant d'un réseau de communication sans fil et de mémoriser les octets dans la mémoire (104) ;
un module d'accès direct à la mémoire (DMA) (110) opérationnel afin de transférer de manière autonome un nombre d'octets prédéfini d'une adresse de mémoire source à une adresse de mémoire de destination ; et
un processeur (102) opérationnel afin de programmer le module de DMA (110) avec les adresses de source et de destination et le nombre d'octets ; dans lequel
le module de DMA (110) est en outre opérationnel afin de traiter de manière autonome les octets en inspectant chaque octet, et en réponse à l'inspection, de remplacer sélectivement au moins un octet par deux octets de substitution, avant de transférer les octets à l'adresse de destination.

8. Terminal mobile selon la revendication 7, dans lequel le module de DMA est en outre opérationnel afin de calculer une séquence de vérification de trame, FCS, (54) en réponse aux octets, et de transférer la FCS (54) à l'adresse de destination suivant les octets.

9. Terminal mobile (12) selon la revendication 7, dans lequel le module de DMA (110) est en outre opérationnel afin d'ajouter un fanion de trame (57) aux octets avant de transférer les octets à l'adresse de destination.

10. Terminal mobile (12) selon la revendication 7, comprenant en outre une interface de données (112) opérationnelle afin de transférer des données entre le terminal mobile (12) et un dispositif périphérique (14).

11. Terminal mobile (12) selon la revendication 10, dans lequel une des adresses de source et de destination est une adresse de mémoire et l'autre des adresses de source et de destination est une adresse périphérique.

12. Terminal mobile (12) selon la revendication 7, dans lequel l'adresse de source est une adresse de mémoire, et dans lequel le processeur (102) formate les octets en mémoire avant que le module de DMA (110) lise les octets.

13. Terminal mobile (12) selon la revendication 12, dans lequel le processeur (102) ajoute en préfixe un ou plusieurs des champs d'adresse, de commande et de protocole (42, 44, 46) aux octets.

14. Terminal mobile (12) selon la revendication 12, dans lequel le processeur (102) ajoute en suffixe une seconde adresse de source et de destination et un second compte d'octets, et dans le module de DMA (110) traite et transfère automatiquement des octets de la seconde adresse de source à la seconde adresse de destination.

15. Terminal mobile (12) selon la revendication 7, dans lequel le module de DMA (110) inclut en outre un bloc d'accélération de matériel PPP (114) opérationnel afin de traiter de manière autonome les octets en inspectant chaque octet, et en réponse à l'inspection, de remplacer sélectivement au moins un octet par deux octets de substitution.

16. Terminal mobile (12) selon la revendication 15, dans lequel le module de DMA (110) comprend en outre une mémoire tampon d'entrée (116) depuis laquelle le bloc d'accélération de matériel PPP (114) lit des octets et une mémoire tampon de sortie (118) à laquelle le bloc d'accélération de matériel PPP (114) écrit des octets traités.

17. Terminal mobile (12) selon la revendication 16, dans lequel la taille de la mémoire tampon de sortie (118) excède trois fois la taille de la mémoire tampon d'entrée (118).

18. Terminal mobile (12) selon la revendication 7, comprenant en outre une interface de communication de dispositif périphérique (112), et dans lequel une des adresses de source et de destination décide de l'interface de communication de dispositif périphérique (112).

19. Terminal mobile (12) selon la revendication 7, dans lequel le module de DMA (110) est en outre opérationnel afin de traiter de manière autonome les octets en inspectant chaque octet, et en réponse à l'inspection, de rejeter sélectivement l'octet et de remplacer l'octet lu suivant par une valeur déduite d'une opération logique sur l'octet, avant de transférer les octets à l'adresse de destination.

20. Terminal mobile (12) selon la revendication 19, dans lequel le module de DMA (110) est en outre opérationnel afin de calculer une séquence de vérification de trame, FCS, en réponse aux octets et de comparer la FCS à une valeur de FCS dans un ou plusieurs des octets lus.

21. Terminal mobile (12) selon la revendication 19, dans lequel le module de DMA (110) est en outre opérationnel afin de détecter un ou plusieurs fanions de trame dans les octets, et de rejeter les octets de fanion de trame des octets transférés vers l'adresse de destination.
